**Europäisches Patentamt**

**European Patent Office**

**Office européen des brevets**

(11) Veröffentlichungsnummer: **0 178 538**
**B1**

(12) **EUROPÄISCHE PATENTSCHRIFT**

(45) Veröffentlichungstag der Patentschrift:
**03.05.89**

(21) Anmeldenummer: **85112478.4**

(22) Anmeldetag: **02.10.85**

(51) Int. Cl.⁴: **G 03 B 42/02**

(54) **Vorrichtung zum wahlweisen Aufnehmen und Durchleuchten eines Patienten.**

(30) Priorität: **04.10.84 DE 3436427**

(43) Veröffentlichungstag der Anmeldung:
**23.04.86 Patentblatt 86/17**

(45) Bekanntmachung des Hinweises auf die Patenterteilung:
**03.05.89 Patentblatt 89/18**

(84) Benannte Vertragsstaaten:
**DE FR GB**

(56) Entgegenhaltungen:
**FR-A- 2 402 224**

(73) Patentinhaber: **Siemens Aktiengesellschaft Berlin und München, Wittelsbacherplatz 2, D-8000 München 2 (DE)**

(72) Erfinder: **Warden, Hans-Erik, Rimborgraend 12, S-194 51 Upplands Vaesby (SE)**

ACTORUM AG

## Beschreibung

Die Erfindung betrifft eine Vorrichtung zum wahlweisen Aufnehmen und Durchleuchten eines Patienten mittels eines Röntgenuntersuchungsgerätes mit einem Röntgenfilmwechsler, der eine Aufnahmeeinheit aufweist, in der Verstärkerfolien angeordnet sind, und in dem eine Filmtransportbahn für Röntgenfilm zwischen einem Vorrats- und einem Auffangmagazin vorgesehen ist, sowie einem Röntgenbildverstärker, wobei die Aufnahmeeinheit und der Röntgenbildverstärker dieselbe Bildachse aufweisen, wobei der Filmwechsler mindestens eine motorgetriebene Antriebsrolle und mindestens eine erste Andruckrolle für den Filmtransport vom Magazin zur Aufnahmeeinheit aufweist und zumindest diese Andruckrolle(n) in Transportrichtung im Randbereich des Filmes angeordnet ist bzw. sind.

Bei einer Röntgenuntersuchung besteht häufig der Wunsch, bei Verwendung eines Röntgenfilmwechslers zur Anfertigung von Röntgenaufnahmen auch die Möglichkeit zu schaffen, mit Hilfe eines Röntgenbildverstärkers durchleuchten zu können. Für diesen Fall dürfen vor dem Röntgenbildverstärker keine die Strahlung schwächenden Teile vorhanden sein. Gemäss der EP 0 003 691 B 1 ist das bei einem Röntgenuntersuchungsgerät, bei dem der Röntgenbildverstärker und der Röntgenfilmwechsler ortsfest zueinander angeordnet sind, dadurch gelöst, dass zum Arbeiten mit dem Röntgenbildverstärker die ein Aufnahmefenster, eine Andruckplatte für Verstärkerfolien und die Verstärkerfolie selbst enthaltende Aufnahmeeinheit manuell aus dem Röntgenfilmwechsler herausgezogen wird. Die Röntgenstrahlung kann dann ungehindert durch den Röntgenfilmwechsler hindurch auf den Röntgenbildverstärker fallen.

Bei einer Angiographieuntersuchung wird das in ein Blutgefäss eines Patienten injizierte Kontrastmittel mit dem Röntgenbildverstärker verfolgt. Wenn nun der Arzt während einer derartigen Untersuchung rasch eine Röntgenaufnahme machen will, muss die Aurnahmeeinheit mit den dazugehörigen Teilen wieder hineingeschoben werden. Dies kann bei dem bekannten Gerät so lange dauern, dass die gewünschte Aufnahme nicht rechtzeitig gemacht werden kann. Das beschriebene Röntgengerät ist daher nicht für Röntgenuntersuchungen geeignet, bei denen ein rascher Wechsel zwischen Aufnahme und Durchleuchtung erfolgen soll.

In der FR-A-2 402 224 ist ein Filmwechsler beschrieben, mit dem ein Wechsel zwischen Aufnahme und Durchleuchtung möglich ist. Die Verstärkerfolien sind dazu jeweils auf einem langen Transportband befestigt, mit dessen Hilfe sie in die Aufnahmeeinheit hinein oder aus dieser heraus transportiert werden können. Jedes Transportband wird jeweils mittels einer Transportvorrichtung, bestehend aus Umlenk-, Hilfs- und Aufwickelwalzen, bestätigt. Damit die Filmtransportbahn zwischen dem Vorrats- und dem Auffangmagasin freigehalten wird, ist das Transportband mit den Walzen für die obere Verstärkerfolie oberhalb der Filmtransportbahn und das Transportband mit den Walzen für die untere Verstärkerfolie unterhalb der Filmtransportbahn angebracht. Dies ist aufwendig und platzraubend, so dass der Filmwechsler insgesamt sperrig wird. Ferner sind die Verstärkerfolien und insbesondere die untere Verstärkerfolie schwer zugänglich. Ein weiterer Nachteil besteht darin, dass die Verstärkerfolien beim Reinigen und Austauschen vom Transportband abgelöst werden müssen.

Der Erfindung liegt die Aufgabe zugrunde, ein Röntgenuntersuchungsgerät der eingangs genannten Art zu schaffen, bei dem sowohl ein rasches und automatisches Wechseln zwischen Aufnahme und Durchleuchtung als auch ein einfacher und schneller Austausch der Verstärkerfolien vorgenommen werden kann.

Diese Aufgabe ist erfindungsgemäss dadurch gelöst, dass die Antriebsrolle und die Andruckrolle(n) gleichzeitig als Transportvorrichtung für die Verstärkerfolien dienen, dass die Drehrichtung der Antriebsrollen umkehrbar ist, dass die Verstärkerfolien über die Länge der Aufnahmeeinheit hinaus Verlängerungen aufweisen, die in der Breite so reduziert sind, dass sie nicht durch die erste(n) Andruckrolle(n) erfasst werden, und dass eine Einrichtung vorgesehen ist, die die Verstärkerfolien zumindest so weit verschieben kann, dass sie durch die Transportvorrichtung erfasst werden. Hierdurch ist ein schneller und automatischer Transport der Verstärkerfolien ohne zusätzliche Transportbänder und Walzen möglich. Dadurch, dass die losen Verstärkerfolien transportiert werden können, kann nicht nur der Wechsel zwischen Aufnahme und Durchleuchtung rasch erfolgen, sondern die Verstärkerfolien können auch leicht entfernt werden.

Eine besonders günstige Ausgestaltung erhält man dadurch, dass die Einrichtung direkt mit der Transportvorrichtung gekoppelt ist. Dadurch ist erreicht, dass die Einrichtung keinen zusätzlichen Raum im Filmwechsler einnimmt.

In einer weiteren Ausbildung der Erfindung wird vorgeschlagen, dass die Einrichtung einen Mitnehmerarm aufweist, der derart mit der Transportvorrichtung gekoppelt ist, dass er in der für den Filmtransport vorgesehenen Drehrichtung der Antriebsrollen frei läuft und in der entgegengesetzten Richtung derart geschwenkt wird, dass er mit den Verlängerungen der Verstärkerfolien in Eingriff kommt. Der Mitnehmerarm befördert dadurch in einfacher Weise die Verstärkerfolien in Transportposition.

Eine technisch einfache Lösung ergibt sich dadurch, dass mindestens eine weitere, in Filmtransportrichtung vor der ersten Andruckrolle derart gelagerte Andruckrolle vorgesehen ist, die bei der Drehrichtung der Antriebsrolle, die der für den Filmtransport vorgesehenen Drehrichtung entgegengesetzt ist, von dieser abhebt. Dadurch ist erreicht, dass die Verstärkerfolien beim Heraustransportieren aus dem Aufnahmefeld reibungslos zwischen der Antriebsrolle und der weiteren Andruckrolle befördert werden können

In einer weiteren Ausgestaltung der Erfindung wird vorgeschlagen, das die Verlängerungen der Verstärkerfolien mit Anschlägen versehen sind, die miteinander und mit dem Mitnehmerarm in Eingriff bringbar sind. Dadurch ist erreicht, dass der Mitnehmerarm die Verstärkerfolien sicher greift und diese in Transportposition bringt.

In einer besonders vorteilhaften Weiterbildung der Erfindung wird vorgeschlagen, dass das Material der Verlängerungen der Verstärkerfolien magnetisch ist und dass im Filmwechsler im Bereich der Verlängerungen der Verstärkerfolien Magnete zum Separieren der Verlängerungen und der Verstärkerfolien vorhanden sind. Dadurch ist bei Aufnahmen eine sichere Trennung der Verstärkerfolien gewährleistet, so dass die Röntgenfilmblätter zwischen Vorratsmagazin und Aufnahmefeld sicher transportiert werden können.

Eine besonders günstige Ausführungsform der Erfindung besteht darin, dass die Verlängerungen der Verstärkerfolien als Filmführung dienen. Dadurch ist erreicht, dass der Filmwechsler keine zusätzlichen Filmführungen aufweisen muss.

Die Erfindung ist nachfolgend anhand eines in den Zeichnungen dargestellten Ausführungsbeispiels näher erläutert. Es zeigen:

Fig. 1 eine Seitenansicht eines Filmwechslers mit einer Vorrichtung nach der Erfindung,

Fig. 2 eine Draufsicht eines Filmwechslers nach Figur 1 und

Fig. 3 und 4 weitere Seitenansichten der erfindungsgemässen Vorrichtung nach Fig. 1.

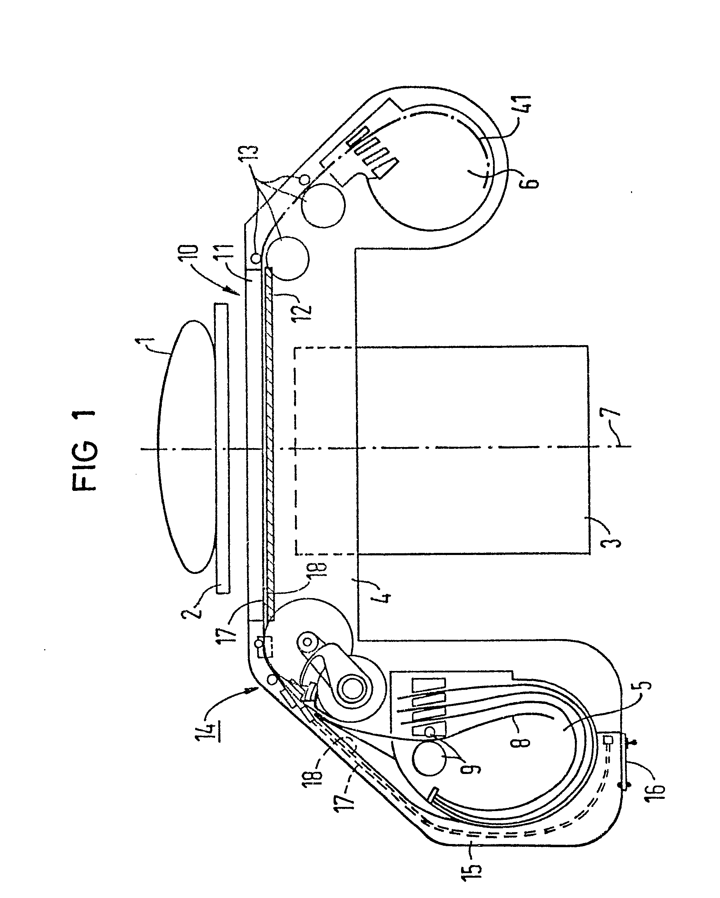

In der Figur 1 ist ein Patient 1 im Querschnitt dargestellt, der auf einer röntgenstrahlendurchlässigen Lagerungsplatte 2 ruht. Ein Röntgenuntersuchungsgerät weist einen Röntgenbildverstärker 3 auf, dem in bekannter Weise und daher nicht dargestellt eine Fernsehkette zur Wiedergabe von Durchleuchtungsbildern nachgeschaltet ist. Zur Anfertigung von Röntgenfilmbildern dient ein Röntgenfilmwechsler 4 mit einem Vorratsmagazin 5 und einem Auffangmagazin 6 für Röntgenfilmblätter. Ein Vorrats- und Auffangmagazin dieser Art ist in der DE-OS 31 04 670 beschrieben. Der Röntgenbildverstärker 3 und der Röntgenfilmwechsler 4 weisen dieselbe Bildachse 7 auf, die demgemäss zentrisch das Bildfeld des Röntgenfilmwechslers 4 durchsetzt.

Zum Anfertigen von Röntgenfilmaufnahmen mit Hilfe des Röntgenfilmwechslers 4 wird jeweils nacheinander ein Röntgenfilmblatt 8 mittels Transportrollen 9 aus dem Vorratsmagazin 5 herausbefördert und mittels später beschriebener Transportmittel zur Aufnahmeeinheit 10 transportiert. Von der Aufnahmeeinheit 10 sind in dieser Figur nur die Andruckplatten 11 und 12 für die ebenfalls später näher beschriebenen Verstärkerfolien 17, 18 dargestellt. Nach einer Aufnahme wird das Röntgenfilmblatt 8 in das Auffangmagazin 6 mittels weiterer Transportrollen 13 befördert. Die strich-punktierte Linie 41 deutet diesen Vorgang an.

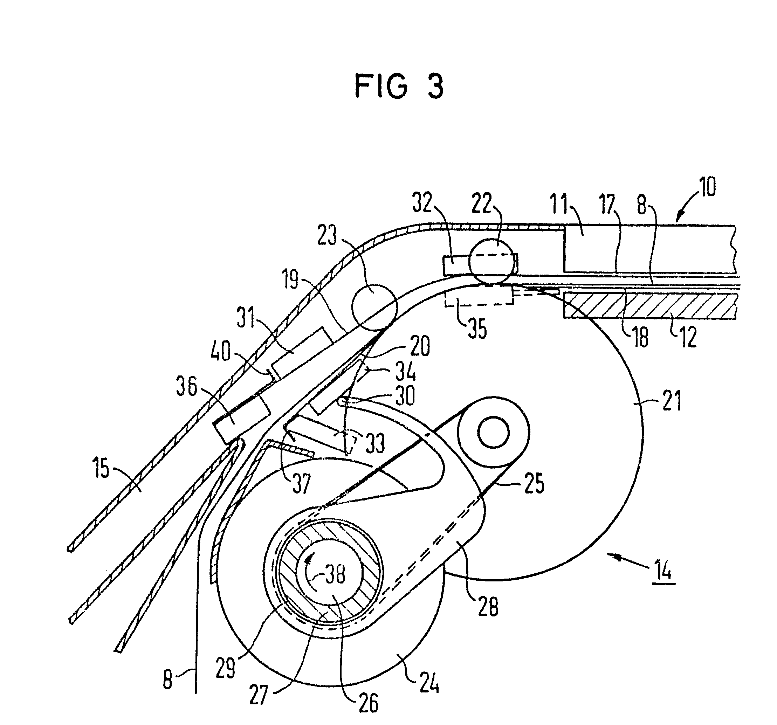

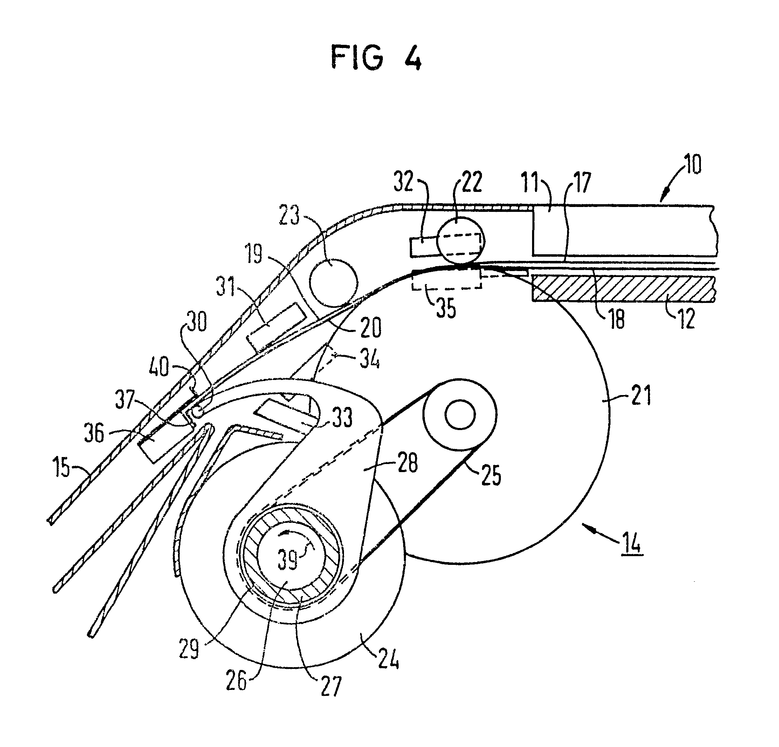

Zum Arbeiten mit dem Röntgenbildverstärker werden die Verstärkerfolien 17, 18 mittels in den Figuren 3 und 4 näher beschriebenen Transportvorrichtungen 14, 14a aus dem Aufnahmefeld herausgefahren und in ein Aufbewahrungsfach 15 geschoben. Die Verstärkerfolien 17, 18 sind in dieser Lage gestrichelt gezeichnet dargestellt. Im Bildfeld der Aufnahmeeinheit 10 sind dann keine die Röntgenstrahlung schwächenden Teile vorhanden, so dass eine einwandfreie Durchleuchtung des Patienten 1 durchgeführt werden kann. Wenn nun rasch eine Röntgenaufnahme gemacht werden soll, werden die Verstärkerfolien 17, 18 mittels der Transportvorrichtungen 14, 14a wieder zur Aufnahmeeinheit 10 gefahren.

Das freie Ende des Aufbewahrungsfaches 15 weist eine Öffnung mit einem Deckel 16 auf, durch die die Verstärkerfolien 17, 18 erreichbar und aus dem Aufbewahrungsfach 15 herausziehbar sind. Hierdurch können die Verstärkerfolien 17, 18 schnell und einfach ausgewechselt werden.

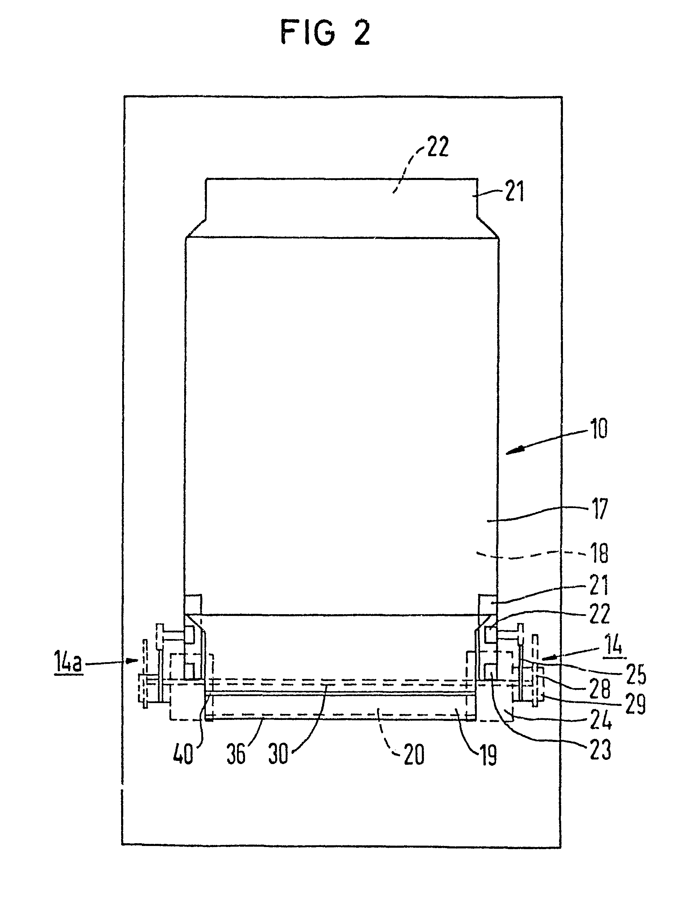

In der Fig. 2 ist gezeigt, dass der Röntgenfilmwechsler 4 zwei Transportvorrichtungen 14, 14a zum Befördern von Röntgenfilmblättern 8 bzw. Verstärkerfolien 17, 18 aufweist, die auf jeweils einer Seite, in Transportrichtung der Röntgenfilmblätter 8 gesehen, vor der Aufnahmeeinheit 10 angebracht sind. Die beiden Transportvorrichtungen 14, 14a werden synchron betrieben. In dieser Figur ist ferner dargestellt, dass die Verstärkerfolien 17, 18 Verlängerungen 19, 20, 21, 22 aufweisen, die über die Länge der Aufnahmeeinheit hinaus verlängert sind und die in der Breite so reduziert sind, dass sie nicht durch die Transportvorrichtungen 14, 14a erfasst werden.

In Fig. 3 ist eine der Transportvorrichtungen 14, 14a dargestellt, die eine motorgetriebene Antriebsrolle 21 und Andruckrollen 22 und 23 aufweist. Die Antriebsrolle 21 ist mit dem Motor 24 über eine Transmission 25, z.B. einen Kettenzug, verbunden. Auf der Welle 26 des Motors 24 ist ein Freilaufrad 27 angebracht, auf dem unter Zwischenschaltung einer Gleitkupplung ein Mitnehmerarm 28 sitzt. Der Mitnehmerarm 28 weist eine Querstange 30 auf, die sich bis zum Mitnehmerarm der gegenüberliegenden Transportvorrichtung 14a erstreckt.

Das Material der Verlängerungen 19, 20 der Verstärkerfolien 17, 18 ist magnetisch. Zum Trennen der Verlängerungen 19, 20, wenn die Verstärkerfolien 17, 18 in Aufnahmeposition sind, sind im Bereich der Verlängerungen 19, 20 Magnete befestigt. Die Magnete 31 und 32 ziehen die Verlängerung 19 nach oben. Die Magnete 33, 34 und 35 ziehen die Verlängerung 20 nach unten. Die Magnete 31 und 33 dienen ausserdem als Anschläge für die Verlängerungen 19 und 20. Ferner sind die Enden der Verlängerungen 19, 20 mit Anschlägen 36, 37 versehen. Die Verlängerung 19 weist ausserdem einen weiteren Anschlag 40 auf. Durch das Separieren der Verlängerungen 19, 20 können die Röntgenfilmblätter 8 einwandfrei zwischen diesen vom Vorratsmagazin 5 zur Aufnahmeeinheit 10 transportiert werden. Die Verlängerungen 19, 20 dienen folglich als Filmführung.

Wenn eine Röntgenaufnahme gemacht werden soll, wird jeweils ein Röntgenfilmblatt 8 mittels der Transportrollen 9 aus dem Vorratsmagazin 5 herausbefördert (Fig. 1) und legt sich zwischen die Antriebsrolle 21 und die Andruckrolle 23. Der Motor 24 dreht nun über die Welle 26 das Freilaufrad 27 und den Kettenzug 25 in Richtung des Pfeiles 38, so dass die Antriebsrollen 21 im Uhrzeigersinn gedreht wird. Der Mitnehmerarm 28 und die Gleitkupplung 29 laufen in dieser Drehrichtung der Motorwelle 26 frei, so dass der Mitnehmerarm 28 während des Filmtransportes in der in in der Figur gezeigten Lage stehen bleibt. Gleichzeitig befördert die Antriebsrolle 21 und die Andruckrolle 23 das Röntgenfilmblatt 8 zur Andruckrolle 22 und weiter zur Aufnahmeeinheit 10, wo eine Aufnahme gemacht wird.

Wenn mit dem Röntgenbildverstärker 3 eine Durchleuchtung des Patienten 1 durchgeführt werden soll, werden die Verstärkerfolien aus dem Aufnahmefeld 10 heraustransportiert. Dies erfolgt, indem der Motor 24 die Welle 26 und damit auch das Freilaufrad 27 und die Antriebsrolle 21 in entgegengesetzter Richtung dreht, wie es der Pfeil 39 in Figur 4 zeigt. Das Freilaufrad 27 greift nun in die Gleitkupplung 29 und den Mitnehmerarm 28, so dass sie in die erwähnte Richtung mitgedreht werden, wie es in Figur 4 dargestellt ist. Dabei drückt die Querstange 30 des Mitnehmerarmes 28 die Verlängerung 20 der Verstärkerfolie 18 gegen die Verlängerung 19 und kommt damit durch die Anschläge 36, 37 in Eingriff mit beiden Verlängerungen 19, 20. Die Verlängerungen 19, 20 werden durch die Stange 30 so weit verschoben, dass die Antriebsrolle 21 und die Andruckrolle 22 die Verstärkerfolien 17, 18 greifen. Die Antriebs- und Andruckrollen 21, 22 transportieren die Verstärkerfolien 17, 18 so lange, bis sie nicht mehr mit diesen in Eingriff stehen. Die weitere Andruckrolle 23 ist derart gelagert, dass sie bei der Drehrichtung, die der für den Filmtransport vorgesehenen Drehrichtung entgegengesetzt ist, von der Antriebsrolle 21 abhebt. Daher kommen die Enden der Verstärkerfolien 17, 18 zwischen den Andruckrollen 22, 23 zu liegen. Nunmehr kann eine Durchleuchtung des Patienten 1 erfolgen. Wenn rasch eine Aufnahme gemacht werden soll, werden die Verstärkerfolien 17, 18 wieder zum Aufnahmefeld 10 transportiert. Dies erfolgt, indem die Andruckrolle 23 die Verstärkerfolien 17, 18 gegen die Antriebsrolle 21 drückt, die wie in Figur 3 beschriebenerweise nun im Uhrzeigersinn läuft. Die Verstärkerfolien werden nun so lange transportiert, bis sie die Andruckrolle 23 und 22 verlassen haben und die Anschläge 37 und 40 der Verlängerungen 19, 20 die Magnete 31 bzw. 34 erreicht haben. Der Mitnehmerarm 28 nimmt die in der Figur 1 gezeigte Parklage an.

In der beschriebenen Weise kann schnell und automatisch ein Wechsel zwischen einer Aufnahme und einer Durchleuchtung eines Patienten vorgenommen werden.

**Patentansprüche**

1. Vorrichtung zum wahlweisen Aufnehmen und Durchleuchten eines Patienten mittels eines Röntgenuntersuchungsgerätes mit einem Röntgenfilmwechsler, der eine Aufnahmeeinheit aufweist, in der Verstärkerfolien angeordnet sind, und in dem eine Filmtransportbahn für Röntgenfilm zwischen einem Vorrats- und einem Auffangmagazin vorgesehen ist, sowie einem Röntgenbildverstärker, wobei die Aufnahmeeinheit und der Röntgenbildverstärker dieselbe Bildachse aufweisen, wobei der Filmwechsler mindestens eine motorgetriebene Antriebsrolle und mindestens eine erste Andruckrolle für den Filmtransport vom Magazin zur Aufnahmeeinheit aufweist und zumindest diese Andruckrolle(n) in Transportrichtung im Randbereich des Filmes angeordnet ist bzw. sind, dadurch gekennzeichnet, dass die Antriebsrolle (21) und die Andruckrolle(n) (22) gleichzeitig als Transportvorrichtung (14, 14a) für die Verstärkerfolien (17, 18) dienen, dass die Drehrichtung der Antriebsrollen (22) umkehrbar ist, dass die Verstärkerfolien (17, 18) über die Länge der Aufnahmeeinheit (10) hinaus Verlängerungen (19, 20) aufweisen, die in der Breite so reduziert sind, dass sie nicht durch die erste(n) Andruckrolle(n) (22) erfasst werden, und dass eine Einrichtung (27 bis 30) vorgesehen ist, die die Verstärkerfolien (17, 18) zumindest so weit verschieben kann, dass sie durch die Transportvorrichtung (14, 14a) erfasst werden.

2. Vorrichtung nach Anspruch 1, dadurch gekennzeichnet, dass die Einrichtung (27 bis 30) direkt mit der Transportvorrichtung (14, 14a) gekoppelt ist.

3. Vorrichtung nach Anspruch 1 oder 2, dadurch gekennzeichnet, dass die Einrichtung (27 bis 30) einen Mitnehmerarm (28) aufweist, der derart mit der Transportvorrichtung (14, 14a) gekoppelt ist, dass er in der für den Filmtransport vorgesehenen Drehrichtung der Antriebsrollen (22) frei läuft und in der entgegengesetzten Richtung derart geschwenkt wird, dass er mit den Verlängerungen (19, 20) der Verstärkerfolien (17, 18) in Eingriff kommt.

4. Vorrichtung nach einem der Ansprüche 1 bis 3, dadurch gekennzeichnet, dass mindestens eine weitere, in Filmtransportrichtung vor der ersten Andruckrolle (22) derart gelagerte Andruckrolle (23) vorgesehen ist, dass sie bei der Drehrichtung der Antriebsrolle (21), die der für den Filmtransport vorgesehenen Drehrichtung entgegengesetzt ist, von dieser abhebt.

5. Vorrichtung nach Anspruch 3, dadurch gekennzeichnet, dass die Antriebsrolle (21) mit dem Motor (24) über eine Transmission (25) verbunden ist und dass auf der Achse (26) des Motors (24) ein Freilaufrad (27) angebracht ist, auf dem der Mitnehmerarm (28) unter Zwischenschaltung einer Gleitkupplung (29) sitzt.

6. Vorrichtung nach Anspruch 3 oder 5, dadurch gekennzeichnet, dass die Verlängerungen (19, 20) der Verstärkerfolien (17, 18) mit Anschlägen (36, 37) versehen sind, die miteinander und mit dem Mitnehmerarm (28) im Eingriff bringbar sind.

7. Vorrichtung nach einem der Ansprüche 1 bis 6, dadurch gekennzeichnet, dass das Material der Verlängerungen (19, 20) der Verstärkerfolien (17, 18) magnetisch ist.

8. Vorrichtung nach einem der Ansprüche 1 bis 7, dadurch gekennzeichnet, dass im Röntgenfilmwechsler (4) im Bereich der Verlängerungen (19, 20) der Verstärkerfolien (17, 18) Magnete (31 bis 35) zum Separieren der Verlängerungen (19, 20) und der Verstärkerfolien (17, 18) vorhanden sind.

9. Vorrichtung nach einem der Ansprüche 1 bis 8, dadurch gekennzeichnet, dass die Verlängerungen (19, 20) der Verstärkerfolien (17, 18) als Filmführung dienen.

10. Vorrichtung nach einem der Ansprüche 1 bis 9, dadurch gekennzeichnet, dass ein Aufbewahrungsfach (15) für die Verstärkerfolien (17, 18) vorgesehen ist.

**Revendications**

1. Dispositif pour réaliser, au choix, une radiographie et une radioscopie d'un patient à l'aide d'un appareil de radiodiagnostic comportant un changeur de film radiographique, qui comporte une unité de prise de vues, dans laquelle sont disposés des écrans renforçateurs, et dans lequel une voie de transport pour un film radiographique est prévue entre un magasin débiteur et un magasin récepteur, ainsi qu'un amplificateur de brillance radiologique, et dans lequel l'unité de prise de vues et l'amplificateur de brillance radiologique possèdent le même axe d'image et le changeur de film comporte au moins un rouleau d'entraînement entraîné par un moteur et au moins un premier galet presseur pour le transport du film du magasin à l'unité de prise de vues, et au moins ce ou ces galets presseurs est ou sont disposés dans la zone marginale du film, dans la direction de transport, caractérisé par le fait que le rouleau d'entraînement (21) et le ou les galets presseurs (22) sont utilisés simultanément comme dispositifs d'entraînement (14, 14a) pour les écrans renforçateurs (17, 18), que le sens de rotation des galets d'entraînement (22) peut être inversé, que les écrans renforçateurs (17, 18) possèdent des prolongements (19, 20), qui s'étendent au-delà de l'étendue en longueur de l'unité de prise de vues (10) et possèdent une largeur réduite telle qu'ils ne sont pas saisis par le ou les premiers galets presseurs (22), et qu'il est prévu un agencement (27 à 30) pouvant déplacer les écrans renforçateurs (17, 18) au moins suffisamment pour qu'ils soient saisis par le dispositif de transport (14, 14a).

2. Dispositif suivant la revendication 1, caractérisé par le fait que l'agencement (27 à 30) est accouplé directement au dispositif de transport (14, 14a).

3. Dispositif suivant la revendication 1 ou 2, caractérisé par le fait que l'agencement (27) comporte un bras d'entraînement (28) accouplé au dispositif de transport (14, 14a) de telle sorte qu'il se déplace librement dans le sens de rotation, prévu pour le transport du film, des galets d'entraînement (22) et est basculé dans le sens opposé de telle sorte qu'il vient en prise avec les prolongements (19, 20) des écrans renforçateurs (17, 18).

4. Dispositif suivant l'une des revendications 1 à 3, caractérisé par le fait qu'il est prévu au moins un autre galet presseur (23) monté dans le dispositif de transport du film en amont du premier galet presseur (22), de telle sorte qu'il s'écarte du rouleau d'entraînement (21) lorsque ce dernier tourne dans un sens opposé au sens de rotation prévu pour le transport du film.

5. Dispositif suivant la revendication 3, caractérisé par le fait que le rouleau d'entraînement (21) est relié au moteur (24) par l'intermédiaire d'une transmission (25) et que sur l'axe (26) du moteur (24) se trouve disposé un dispositif à roue libre (27), sur lequel le bras d'entraînement (28) s'appuie moyennant le montage intercalé d'un accouplement coulissant (29).

6. Dispositif suivant les revendications 3 ou 5, caractérisé par le fait que les prolongements (19, 20) des écrans renforçateurs (17, 18) sont équipés de butées (36, 37), qui peuvent être amenées en prise entre elles et avec le bras d'entraînement (28).

7. Dispositif suivant l'une des revendications 1 à 6, caractérisé par le fait que le matériau des prolongements (19, 20) des écrans renforçateurs (17, 18) est un matériau magnétique.

8. Dispositif suivant l'une des revendications 1 à 7, caractérisé par le fait que dans le changeur (4) de film radiographique, des aimants (31 à 35) sont prévus, au voisinage des prolongements (19, 20) des écrans renforçateurs (17, 18 , afin de séparer les prolongements (19, 20) et les écrans renforçateurs (17, 18).

9. Dispositif suivant l'une des revendications 1 à 8, caractérisé par le fait que les prolongements (19, 20) des écrans renforçateurs (17, 18) sont utilisés pour guider le film.

10. Dispositif suivant l'une des revendications 1 à 9, caractérisé par le fait qu'il est prévu un casier de stockage (15) pour des écrans renforçateurs (17, 18).

**Claims**

1. Apparatus for alternatively photographing or examining a patient by means of an X-ray examination machine with an X-ray film changer, which has a photographing unit, in which amplifying foils are arranged, and in which a film transport track for X-ray film is provided between a supply magazine and a collector magazine, and with an X-ray image amplifier, the photographing unit and the X-ray image amplifier having the same image axis, the film changer having at least one motor-driven drive roller and at least one first pressure roller for the film transport from the magazine to the photographing unit, and at least this (these) pressure roller(s) being arranged in the direction of transport in the border region of the film, characterized in that the drive roller (21) and the pressure roller(s) (22) serve simultaneously as transport device (14, 14a) for the amplifying foils (17, 18), in that the direction of rotation of the drive rollers (22) is reversible, in that the amplifying foils (17, 18) have extensions (19, 20) beyond the length of the photographing unit (10) which are so reduced in width that they are not gripped by the first pressure roller(s) (22), and in that a contrivance (27 to 30) is provided, which can displace the amplifying foils (17, 18) at least so far that they are gripped by the transport device (14, 14a).

2. Apparatus according to Claim 1, characterized in that the contrivance (27 to 30) is coupled directly with the transport device (14, 14a).

3. Apparatus according to Claim 1 or 2, characterized in that the contrivance (27 to 30) has a driver arm (28), which is coupled with the transport device (14, 14a) in such a way that in the direction of rotation of the drive rollers (22) provided for the film transport it runs free and in the opposite direction it is swivelled in such a way that it comes into engagement with the extensions (19, 20) of the amplifying foils (17, 18).

4. Apparatus according to one of Claims 1 to 3, characterized in that at least one further pressure roller (23) is provided, which is mounted in front of the first pressure roller (22) in the film transport direction in such a way that for the direction of rotation of the drive roller (21), which is opposed to the direction of rotation provided for the film transport, it lifts away therefrom.

5. Apparatus according to Claim 3, characterized in that the driver roller (21) is connected to the motor (24) via a transmission (25), and in that a free wheel (27) is mounted on the axis (26) of the motor (24), on which free wheel the driver arm (28) is seated with the insertion of a slip coupling (29).

6. Apparatus according to Claims 3 or 5, characterized in that the extensions (19, 20) of the amplifying foils (17, 18) are provided with stops (36, 37) which may be brought into engagement with one another and with the driver arm (28).

7. Apparatus according to one of Claims 1 to 6, characterized in that the material of the extensions (19, 20) of the amplifying foils (17, 18) is magnetic.

8. Appatatus according to one of Claims 1 to 7, characterized in that magnets (31 to 35) for separating the extensions (19, 20) and the amplifying foils (17, 18) are present in the X-ray film changer (4) in the region of the extensions (19, 20) of the amplifying foils (17, 18).

9. Apparatus according to one of Claims 1 to 8, characterized in that the extensions (19, 20) of the amplifying foils (17, 18) serve as film guide.

10. Apparatus according to one of Claims 1 to 9, characterized in that a retaining compartment (15) is provided for the amplifying foils (17, 18).

1/4

FIG 1

## 2/4

## FIG 2

3/4

FIG 3

4/4

FIG 4